# FASCICULE DE BREVET EUROPEEN

(11) **EP 2 102 870 B1**
(45) Date de publication et mention de la délivrance du brevet: **03.08.2011**
(21) Numéro de dépôt: 07871793.1
(22) Date de dépôt: 05.12.2007
(51) Int. Cl.: G21C 3/322

(54) **EMBOUT INFERIEUR A DISPOSITIF ANTI-DEBRIS A CHICANE POUR ASSEMBLAGE DE COMBUSTIBLE NUCLEAIRE ET ASSEMBLAGE CORRESPONDANT**
FUSSSTÜCK MIT ANTIABLAGERUNGSBLECH FÜR EINE NUKLEARBRENNSTOFFANORDNUNG SOWIE ENTSPRECHENDE ANORDNUNG
BOTTOM NOZZLE WITH BAFFLE ANTI-DEBRIS DEVICE FOR A NUCLEAR FUEL ASSEMBLY AND CORRESPONDING ASSEMBLY

(30) Priorité: 13.12.2006 FR 0610877
(43) Date de publication de la demande: 23.09.2009
(73) Titulaire: Areva NP, 92400 Courbevoie (FR)
(72) Inventeur: VERDIER, Michel, F-69003 Lyon (FR); LABARRIERE, Eric, F-01800 Saint Eloi (FR)
(74) Mandataire: Jacobson, Claude
(86) Numéro de dépôt international: PCT/FR2007/001997
(87) Numéro de publication internationale: WO 2008/087267

(56) Documents cités:
- DE-U1- 29 615 575
- US-A- 4 655 995
- US-A- 5 420 901
- US-A- 5 867 551

## Description

La présente invention concerne un embout inférieur pour assemblage de combustible de réacteur nucléaire à eau légère, l'assemblage comprenant des crayons de combustible et un squelette de support des crayons de combustible, les crayons de combustible s'étendant le long d'une direction longitudinale et étant disposés aux noeuds d'un réseau sensiblement régulier, le squelette de support comprenant un embout inférieur et un embout supérieur et des éléments de liaison des embouts, les crayons de combustible étant disposés longitudinalement entre les embouts,
l'embout inférieur étant du type comprenant :
- des nez d'orientation de l'écoulement de l'eau du réacteur le long des extrémités longitudinales inférieures des crayons de combustible, les nez étant disposés en des noeuds du réseau sensiblement régulier pour être placés dans le prolongement longitudinal d'au moins certains des crayons de combustible et/ou d'au moins certains des éléments de liaison du squelette de support, et
- un dispositif anti-débris délimitant des canaux d'écoulement de l'eau.

L'invention s'applique en particulier, mais pas exclusivement, à la réalisation d'embouts inférieurs d'assemblages de combustible nucléaire pour réacteurs nucléaires à eau légère (LWR en anglais).

Classiquement, un embout inférieur d'assemblage de combustible nucléaire remplit trois fonctions.

La première est une fonction de tenue mécanique, puisque l'embout fait partie du squelette de l'assemblage de combustible nucléaire et c'est par son intermédiaire que l'assemblage repose sur la plaque inférieure de coeur.

La deuxième fonction est une fonction de distribution de l'eau de réfrigération qui circule dans le coeur du réacteur verticalement de bas en haut avec une vitesse ascendante très importante.

Plus précisément, l'eau pénètre dans le coeur au travers de la plaque inférieure de coeur, puis traverse l'embout inférieur, avant d'entrer en contact avec les surfaces extérieures des crayons de combustible.

La troisième est une fonction d'arrêt des débris. En effet, en circulant dans le circuit primaire du réacteur nucléaire, l'eau de réfrigération se charge des débris éventuellement présents. Il est souhaitable d'empêcher que ces débris viennent se coincer entre les crayons de combustible et les éléments qui les maintiennent, notamment au niveau de la grille inférieure du squelette. En effet, ces débris, soumis alors aux sollicitations hydrauliques axiales et transversales importantes dans cette zone, pourraient user les gaines des crayons de combustible et résulter en des pertes d'étanchéité ainsi qu'en une augmentation du taux d'activité du circuit primaire du réacteur.

Cette fonction est assurée par des dispositifs anti-débris qui peuvent être intégrés ou rapportés sur l'embout inférieur, et être plus ou moins élaborés.

Le document US-5 030 412 décrit un dispositif anti-débris élaboré qui délimite des passages qui forment, en coupe verticale, successivement deux chicanes, ce qui permet d'arrêter un plus grand nombre de débris.

Toutefois, les embouts inférieurs munis de tels dispositifs anti-débris plus élaborés conduisent à une perte de charge plus importante. Cette perte de charge se traduit par une moindre efficacité du refroidissement des crayons de combustible nucléaire et par la nécessité de compenser cette perte de charge supplémentaire par l'augmentation de la transparence hydraulique d'autres composants de l'assemblage de combustible nucléaire et/ou par un effort de maintien axial plus élevé exercé par la plaque supérieure de coeur sur l'assemblage de combustible nucléaire.

Par ailleurs, la cohabitation au sein d'un même coeur de réacteur d'assemblages de combustible nucléaire munis d'embouts inférieurs à faible perte de charge et d'assemblages munis d'embouts inférieurs à perte de charge plus importante est également problématique. Elle conduit en effet à des redistributions de l'eau de réfrigération dans la partie inférieure des crayons des assemblages, provoquant des écoulements latéraux pouvant atteindre des vitesses importantes. Ces écoulements latéraux pourraient conduire à l'endommagement des crayons par frottement de leurs gaines sur les grilles du squelette. Un tel phénomène est généralement dénommé « fretting ».

Plus généralement, de tels phénomènes de fretting pourraient apparaître entre la grille inférieure du squelette de support et les gaines des crayons de combustible nucléaire, même lorsque le coeur est chargé d'assemblages à embouts inférieurs induisant la même perte de charge, du fait des vibrations des extrémités inférieures des crayons de combustible nucléaire.

Ces phénomènes de fretting pourraient induire des endommagements des gaines susceptibles de provoquer le relâchement de produits ou de gaz de fission dans l'eau du circuit primaire.

Pour résoudre ce problème de fretting, FR- 2 864 324 a décrit un embout inférieur du type précité. De préférence, les extrémités inférieures des crayons de combustible nucléaire sont retenues axialement et latéralement dans des blocs surmontant les nez d'orientation de l'écoulement d'eau. Cette retenue ainsi que le guidage amélioré de l'eau de réfrigération par les nez autour des crayons de combustible nucléaire, permet de limiter les vibrations des extrémités inférieures des crayons et donc de réduire les risques d'endommagement par fretting.

L'embout inférieur de ce document peut en outre être muni d'un dispositif anti-débris rapporté au-dessus du réseau de nez d'orientation de l'écoulement de l'eau de réfrigération. En variante, ce dispositif peut être venu de matière avec le réseau de nez.

Un tel embout inférieur est satisfaisant mais il apparaît souhaitable d'accroître encore sa capacité d'arrêt des débris.

Un but de l'invention est de résoudre ce problème en fournissant un embout inférieur du type précité, qui présente une capacité d'arrêt des débris améliorée, tout en induisant une perte de charge réduite.

A cet effet, l'invention a pour objet un embout inférieur du type précité, caractérisé en ce qu'au moins certains des canaux d'écoulement de l'eau sont disposés en des noeuds du réseau sensiblement régulier, en ce que des nez d'orientation sont disposés au moins en partie dans lesdits canaux pour délimiter avec ces derniers des passages d'eau, et en ce qu'au moins un passage d'eau comprend une première section et une deuxième section qui sont décalées radialement l'une de l'autre par rapport au noeud correspondant du réseau pour former une chicane.

Selon des modes particuliers de réalisation, l'embout peut comprendre l'une ou plusieurs des caractéristiques suivantes, prise(s) isolément ou selon toutes les combinaisons techniquement possible(s) :
- aucune ligne d'écoulement d'eau ne peut traverser longitudinalement de manière rectiligne le passage,
- le passage d'eau comprend une troisième section décalée radialement de la deuxième section par rapport au noeud correspondant du réseau, la première section, la deuxième section et la troisième section se succédant pour former deux chicanes successives de sens inverses,
- au moins un des passages d'eau entoure le nez correspondant,
- au moins un passage d'eau a une partie aval divergeant dans le sens d'écoulement de l'eau,
- au moins un passage d'eau a une partie amont convergeant dans le sens d'écoulement de l'eau,
- le dispositif anti-débris est venu de matière avec les nez
- l'embout comprend au moins une grille supplémentaire d'arrêt des débris rapportée en amont et/ou en aval des passages,
- l'embout comprend au moins un manchon d'arrêt des débris qui s'étend longitudinalement entre l'extrémité aval d'un canal d'écoulement d'eau et un bloc surmontant le nez correspondant,
- le manchon comprend une zone dénuée d'ouverture d'écoulement d'eau et qui délimite avec le nez une cavité de piégeage des débris,
- l'embout comprend des moyens de retenue latérale des extrémités longitudinales inférieures de sensiblement tous les crayons de combustible, et
- les moyens de retenue comprennent des orifices de réception des extrémités longitudinales inférieures des crayons de combustible ménagés dans des blocs surmontant les nez.

L'invention a en outre pour objet un assemblage de combustible nucléaire pour réacteur nucléaire, l'assemblage comprenant des crayons de combustible et un squelette de support des crayons de combustible, les crayons de combustible s'étendant le long d'une direction longitudinale et étant disposés aux noeuds d'un réseau sensiblement régulier, le squelette de support comprenant un embout inférieur et un embout supérieur et des éléments de liaison des embouts, les crayons de combustible étant disposés longitudinalement entre les embouts, caractérisé en ce que l'embout inférieur est un embout tel que défini ci-dessus, les nez étant disposés longitudinalement sous des crayons de combustible ou des éléments de liaison des embouts.

L'invention sera mieux comprise à la lecture de la description qui va suivre, donnée uniquement à titre d'exemple, et faite en se référant aux dessins annexés, sur lesquels :
- la figure 1 est une vue schématique latérale d'un assemblage de combustible selon l'état de la technique,
- la figure 2 est une vue schématique en plan montrant la répartition des crayons de combustible dans l'assemblage de la figure 1,
- la figure 3 est une vue schématique en perspective d'un embout inférieur selon l'état de la technique,
- la figure 4 est une vue schématique, latérale, partielle et avec arrachement, illustrant la structure d'un embout inférieur selon un premier mode de réalisation de l'invention,
- la figure 5 est une vue analogue à la figure 4 illustrant une première variante, et
- les figures 6 et 7 sont des vues partielles schématiques et en perspective, illustrant deux autres variantes de l'invention.

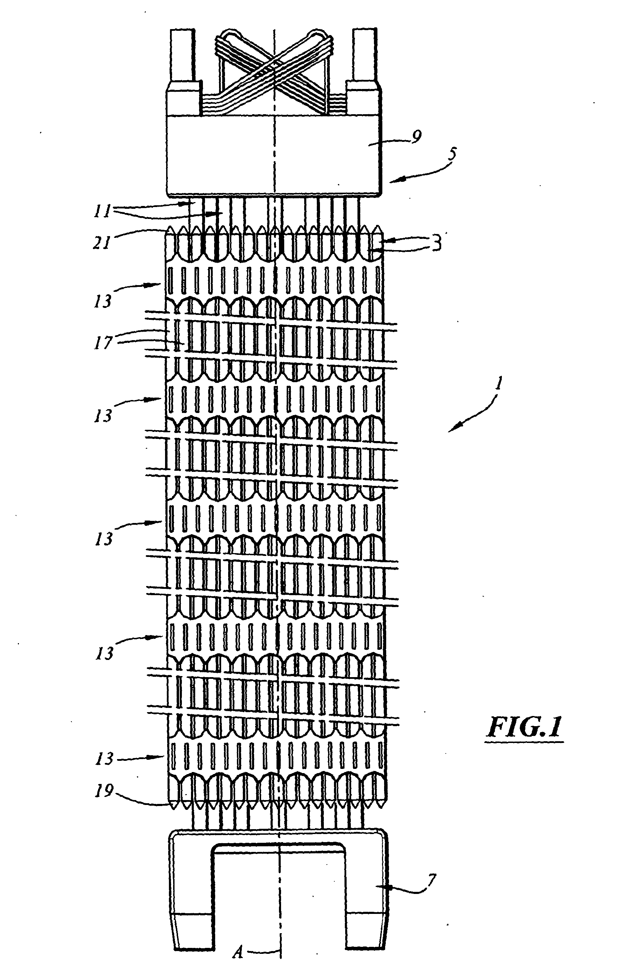

Afin d'illustrer le contexte de l'invention, la figure 1 représente schématiquement un assemblage 1 de combustible nucléaire pour réacteur à eau pressurisée. L'eau assure une fonction de réfrigération et de modération, c'est-à-dire de ralentissement des neutrons produits par le combustible nucléaire.

L'assemblage 1 s'étend verticalement et de manière rectiligne le long d'une direction longitudinale A.

De manière classique, l'assemblage 1 comprend principalement des crayons 3 de combustible nucléaire et une structure ou squelette 5 de support des crayons 3.

Le squelette de support 5 comprend classiquement :
- un embout inférieur 7 et un embout supérieur 9 disposés aux extrémités longitudinales de l'assemblage 1,
- des tubes-guides 11 destinés à recevoir les crayons d'une grappe non-représentée fixe ou de commande du réacteur nucléaire, et
- des grilles 13 de maintien des crayons 3 ou de mélange de l'eau.

Les embouts 7 et 9 sont fixés aux extrémités longitudinales des tubes-guides 11.

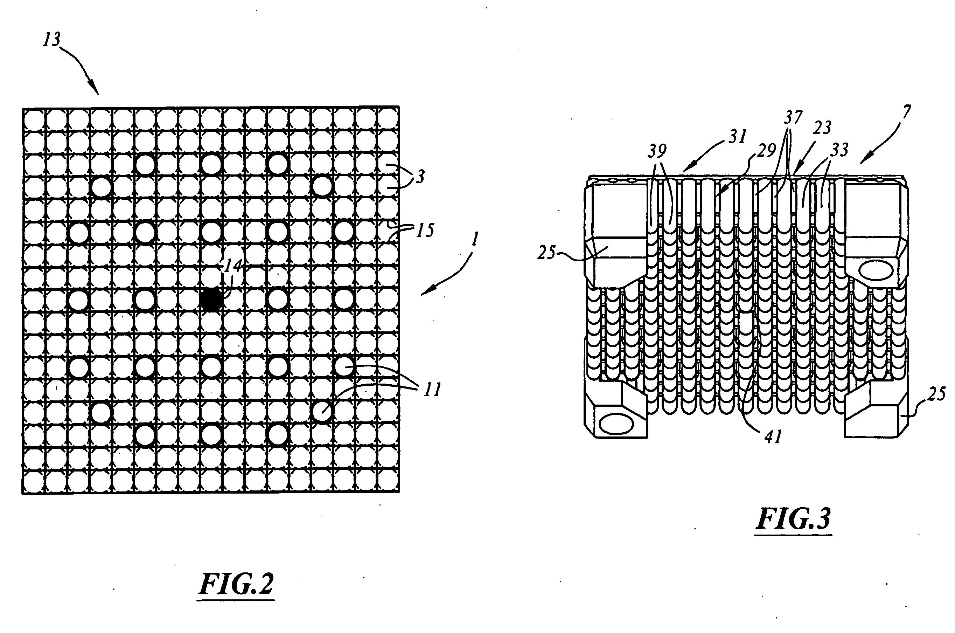

Les crayons 3 s'étendent verticalement entre les embouts 7 et 9. Les crayons 3 sont disposés aux noeuds d'un réseau sensiblement régulier à base carrée où ils sont maintenus par les grilles 13. Certains des noeuds du réseau sont occupés par les tubes-guides 11 et éventuellement par un tube d'instrumentation 14 visible au centre de la figure 2. Sur cette figure 2, les crayons 3 sont en pointillés, les tubes-guides 11 en trait fort, et le tube d'instrumentation 14 est représenté par un disque noir.

Les grilles 13 comprennent classiquement des jeux de plaquettes 15 entrecroisées qui délimitent entre elles des cellules centrées sur les noeuds du réseau régulier. La plupart des cellules sont destinées à recevoir un crayon de combustible 3. Vingt quatre cellules reçoivent chacune un tube-guide 11 et la cellule centrale reçoit le tube d'instrumentation 14.

Dans l'exemple des figures 1 et 2, les grilles de maintien 13 comprennent 17 cellules par côté et le réseau régulier comprend le même nombre de noeuds par côté.

Dans d'autres variantes, le nombre de cellules et de noeuds par côté peut être différent, par exemple de 14 x 14 jusqu'à 18 x 18 pour un assemblage de combustible pour réacteur à eau pressurisée et de 7x7 jusqu'à 11x11 pour un assemblage de combustible pour réacteur à eau bouillante.

Chaque crayon 3 comprend de manière classique une gaine extérieure 17 fermée par un bouchon inférieur 19 et un bouchon supérieur 21, et contenant le combustible nucléaire. Il s'agit par exemple de pastilles de combustible empilées, les pastilles prenant appui sur le bouchon inférieur 19.

Un ressort hélicoïdal non-représenté de maintien peut être disposé dans la gaine 17 entre la pastille supérieure et le bouchon supérieur 21.

La figure 3 illustre un embout inférieur 7 selon le document antérieur FR-2 864 324.

L'embout 7 comprend une paroi 23 horizontale et des pieds 25 qui prolongent la paroi 23 vers le bas pour s'appuyer sur la plaque inférieure du coeur du réacteur.

La paroi 23 a une forme générale parallélépipédique plane et les pieds 25 sont disposés chacun dans un coin de la paroi 23. La paroi 23 comprend un corps 29 inférieur et une plaque 31 supérieure qui recouvre le corps 29.

Le corps 29 comprend une pluralité de blocs 33 qui sont disposés aux noeuds du même réseau que les crayons de combustible 3, les tubes-guides 11 et l'éventuel tube d'instrumentation 14.

Ainsi, comme on le voit sur la figure 3, le corps 29 comprend 17x17 blocs 33 de formes cylindriques.

Chaque bloc 33 est donc situé longitudinalement en dessous soit d'un crayon de combustible 3, soit d'un tube-guide 11 soit du tube d'instrumentation 14, si l'assemblage 1 en comprend un.

Les blocs 33 sont reliés entre eux par des nervures 37 de rigidification qui quadrillent le corps inférieur 29.

Les blocs 33 qui sont disposés sous les crayons de combustible 3, c'est-à-dire la plupart des blocs 33, ont un diamètre correspondant sensiblement au diamètre extérieur des crayons 3 et sont prolongés vers le bas par des nez 39 d'orientation de l'écoulement de l'eau. Ces nez 39 ont sensiblement des formes d'ogive convergeant vers le bas et sont venus de matière avec les blocs 33 considérés.

Comme décrit dans FR-2 864 324, les blocs 33 disposés sous les tubes-guides 11 ne comportent pas de nez 39 intégrés. Ceux-ci sont remplacés par des vis de fixation de l'embout 7 aux tubes-guides 11. Ces vis traversent les blocs 33 correspondants. Les têtes des vis ont sensiblement une forme d'ogive et constituent également des nez 39 d'orientation de l'écoulement de l'eau. En variante, les têtes des vis peuvent avoir d'autres formes et ne pas constituer des nez d'orientation.

Généralement, on ne prévoit pas de nez 39 sous le tube d'instrumentation 14 éventuellement présent, pour permettre le passage de la sonde correspondante.

Ainsi, le corps inférieur 29 de l'embout 7 présente un réseau de nez 39 similaire à celui des crayons de combustible 3, des tubes-guides 11 et de l'éventuel tube d'instrumentation 14.

Ce réseau est seulement interrompu au droit de l'éventuel tube d'instrumentation 14. Dans certaines variantes, le réseau peut également être interrompu localement au voisinage de ce tube 14 de manière plus importante. Dans ces variantes, l'essentiel des crayons 3 restent cependant disposés au-dessus de nez 39. En variante, le contour externe du corps inférieur 29 peut être muni d'une jupe qui relie entre eux les blocs périphériques 33 situés entre les pieds 25 et qui relie également ces blocs 33 aux pieds 25. Cette jupe peut présenter des chanfreins supérieur et inférieur pour faciliter la manutention de l'assemblage.

Les blocs 33 disposés sous les crayons de combustible 3 présentent en outre des orifices borgnes pour recevoir les bouchons inférieurs 19 des crayons 3 et ainsi retenir les crayons 3 latéralement et axialement.

La plaque supérieure 31 forme quant à elle un dispositif anti-débris.

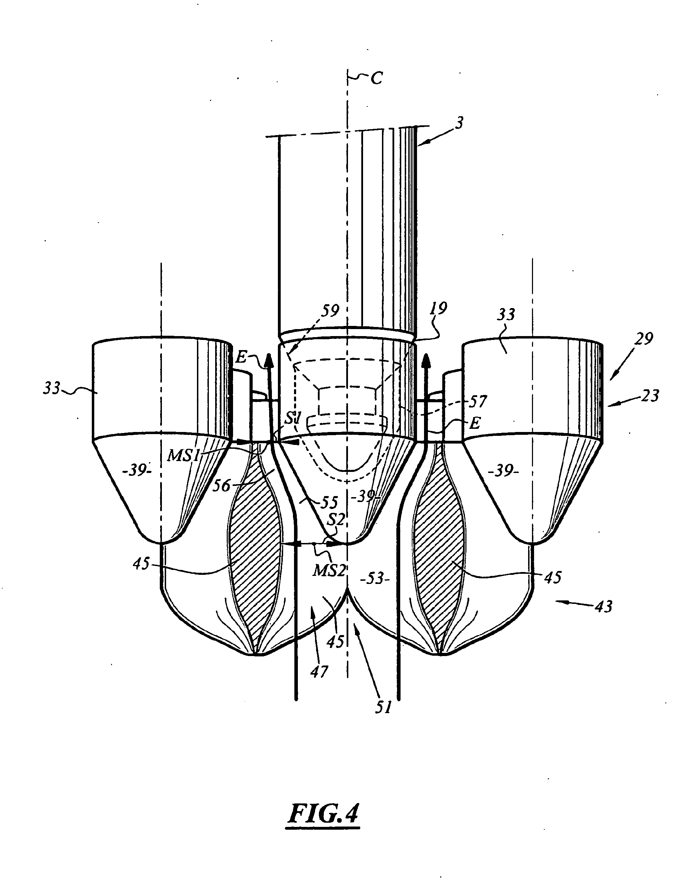

La présente invention, illustrée par les figures 4 à 6, constitue une amélioration du type d'embout inférieur 7 de la figure 3 et s'en distingue principalement par les caractéristiques décrites par la suite et/ou visibles sur les figures.

Dans le mode de réalisation de la figure 4, la paroi horizontale 23 de l'embout inférieur 27 comprend toujours un corps 29 comprenant une pluralité de blocs 33, disposés aux noeuds du même réseau que les crayons de combustible 3, les tubes-guides 11 et l'éventuel tube d'instrumentation 14.

Ces blocs 33 sont également, comme décrit précédemment, prolongés vers le bas par des nez 39 d'orientation de l'écoulement de l'eau de réfrigération. Dans l'exemple représenté, les nez 39 ont des formes sensiblement coniques convergeant vers le bas. On observera que sur la figure 4, les nervures 37 reliant les blocs 33 les plus en avant n'ont pas été représentées.

Dans l'exemple représenté également, la grille 31 a été supprimée et remplacée par une plaque inférieure 43 métallique disposée sous le corps 29 et venue de matière avec le corps 29. Cette plaque 43 forme un dispositif anti-débris comme décrit ultérieurement.

Il est également possible de réaliser le corps 29 et la plaque 43 sous forme de deux pièces séparées rapportées l'une à l'autre. Leur fixation mutuelle peut alors être assurée par exemple par soudage aux coins extérieurs du corps 29 et de la plaque inférieure 43 et en outre par les vis de fixation des tubes-guides 11 à l'embout inférieur 7 qui viennent appuyer la plaque inférieure 43 contre le corps 29. La plaque 43 et le corps 29 sont par exemple réalisés en un matériau résistant à l'usure, comme par exemple un alliage à base de Nickel type Inconel (marque déposée), un acier type A286, un alliage à base de titane...

La plaque inférieure 43 comprend un quadrillage de cloisons 45 qui délimitent entre elles des canaux 47 qui traversent verticalement la plaque 43.

Les canaux 47 sont disposés aux noeuds du même réseau que les crayons de combustible 3, les tubes-guides 11 et l'éventuel tube d'instrumentation 14.

Il est possible que la plaque inférieure 43 comporte, comme le corps 29, quelques irrégularités, notamment au droit des tubes-guides 11 ou de l'éventuel tube d'instrumentation 14.

Les canaux 47 ayant une structure analogue, seule celle du canal 47 visible sur la figure 4 sera décrite par la suite. Sur cette figure deux cloisons latérales 45 bordant le canal 47 ont été coupées selon un plan vertical médian.

Le canal 47 a des sections transversales successives en forme de disques et comprend successivement, dans le sens ascendant de circulation de l'eau de réfrigération, une moitié inférieure convergente et une moitié supérieure divergente. Les formes convergente et divergente précitées sont obtenues grâces à des renflements intermédiaires des cloisons 45 délimitant le canal 47.

Le nez 39 associé au même noeud du réseau que le canal 47 est engagé dans la moitié supérieure du canal 47.

Le nez 39 délimite ainsi dans le canal 47 un passage 51 pour l'eau de réfrigération qui comporte d'une part une moitié inférieure 53 qui converge vers le haut et est composée d'une succession de sections en forme de disques, et d'autre part une moitié supérieure 55 qui enveloppe à distance le nez 39 et qui est composée d'une succession de sections annulaires. Les sections précitées annulaires et en forme de disques sont centrées sur l'axe longitudinal et central C du crayon 3 correspondant, c'est-à-dire celui associé au même noeud du réseau que le canal 47, le bloc 33 et le nez 39 considérés. Ce crayon 3 est le seul représenté sur la figure 3.

Les sections transversales de la moitié supérieure 55 se rapprochent radialement de l'axe C au fur et à mesure que l'on se rapproche de la moitié inférieure 53 du passage 51.

Ainsi, la section aval S1 de la moitié supérieure 55 est située radialement plus à l'extérieur par rapport à l'axe C que la section amont S2 de la moitié supérieure 55, section S2 encore dénommée section intermédiaire du passage 51. La position radiale d'une section considérée correspond par exemple au milieu de la double flèche représentée sur la figure 4. Ainsi, le milieu MS1 de la section S1 est disposé radialement plus à l'extérieur que le milieu MS2 de la section S2.

La moitié supérieure 55 forme donc une chicane 56. Cela est encore matérialisé par les deux flèches E représentant des lignes d'écoulement de l'eau. Ces flèches E montrent en effet que les lignes d'écoulement de l'eau sont déviées latéralement par la chicane 56 par rapport à la verticale.

De préférence, comme dans l'exemple représenté, la chicane 56 formée est telle qu'aucune ligne d'écoulement ne peut traverser verticalement en ligne droite le passage 51. Cela est obtenu dans l'exemple représenté grâce au fait que le diamètre extérieur de la section S2 est inférieur ou égal au diamètre intérieur de la section S1. Dans le cas où d'autres sections que des sections circulaires et annulaires sont envisagées, une relation analogue existera entre les dimensions transversales des sections. Par exemple, pour des sections carrées, cette relation existera entre les longueurs des côtés des carrés.

Comme illustré en pointillés sur la figure 4, le bouchon inférieur 19 du crayon de combustible 3 considéré est reçu dans un orifice borgne 57 ménagé dans le bloc 33 surmontant le nez 39 considéré.

Le bouchon 19 prend par exemple appui via une surface conique 59 sur une surface conique de forme complémentaire prévue dans l'orifice 57. Ainsi, le crayon 3 repose sur le bloc 33 et est donc retenu axialement contre l'effet de la gravité et latéralement contre l'effet des écoulements transverses.

Comme dans l'état de la technique de la figure 3, la présence des nez 39 permet d'orienter les lignes d'écoulement de l'eau sensiblement verticalement le long des extrémités inférieures des crayons 3 et donc de diminuer les vitesses latérales d'écoulement de l'eau. Les vibrations des extrémités inférieures des crayons 3 sont ainsi réduites lors du fonctionnement du réacteur. Ces vibrations sont d'autant plus réduites du fait de la retenue latérale des extrémités inférieures des crayons 3 par l'embout 7 lui-même. Les risques d'endommagement par fretting des gaines 17 des crayons 3 sont donc limités.

En outre, la présence de la plaque inférieure 43 permet d'améliorer sensiblement la capacité d'arrêt des débris, notamment du fait de la présence des chicanes 56 dans les passages 51. En particulier, la capacité d'arrêt est améliorée vis-à-vis des débris longs et fins.

La présence de la plaque inférieure 43 permet également d'améliorer encore l'orientation des lignes d'écoulement de l'eau et donc de limiter les vibrations et les risques d'endommagement par fretting des crayons 3.

Ce résultat est encore accru du fait de la forme convergente puis divergente des passages 51, qui permet de capter et de guider sur une plus grande distance l'eau et ainsi de réduire encore les vitesses latérales d'écoulement.

Pour autant, l'embout 7 a une perte de charge relativement réduite comprise entre celles des embouts à dispositifs anti-débris simples et à dispositifs anti-débris élaborés de l'état de la technique. Cela facilite donc son utilisation dans des coeurs où tous les assemblages n'ont pas les mêmes embouts inférieurs, puisque l'écart de perte de charge par rapport à celle induite par les embouts environnant est réduit.

Les coûts de fabrication de l'embout 7 sont également réduits, notamment du fait que le corps 29 et la plaque 43 peuvent être fabriqués séparément ou d'une seule pièce par moulage, et ne nécessitent donc pas l'assemblage d'un grand nombre d'éléments comme dans certains dispositifs anti-débris tels que celui de US-5 030 412.

En cas d'accident grave, tel qu'un séïsme ou une perte de l'eau de réfrigération du circuit primaire, les blocs 33 retiennent les crayons 3 contre une chute au travers de l'embout inférieur 7.

Cette retenue axiale étant assurée par le réseau de blocs 33, ou même par les nez 39 dans certaines variantes où des blocs 33 ne sont pas prévus, le réseau de passages 51 a pu être superposé à celui des nez 39, contrairement à ce qui pouvait être suggéré par l'état de la technique où on s'efforçait de maintenir les nervures des dispositifs anti-débris en regard des crayons 3 pour prévenir leur chute.

Les passages 51 peuvent avoir des formes variées autres que celles décrites précédemment notamment en jouant sur leurs sections, la hauteur des parties 53 et 55 qui ne correspondent pas nécessairement à des moitiés, leur divergence ou leur convergence ou même l'absence de divergence ou de convergence. Ces diverses formes peuvent être obtenues en jouant sur les cloisons 45 et/ou les nez 39.

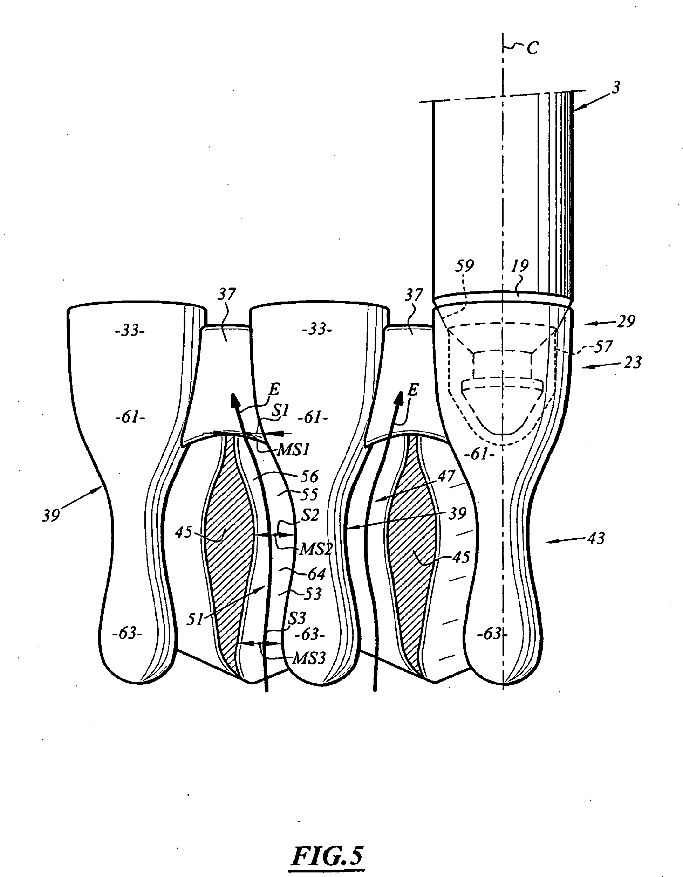

Ainsi, la figure 5 illustre une variante dans laquelle les nez 39 comprennent chacun un tronçon supérieur 61 convergeant vers le bas prolongé par un tronçon inférieur 63 divergeant vers le bas afin de former successivement deux chicanes 56 et 64.

On observera que l'extrémité inférieure du tronçon inférieur 63 est arrondie pour ne pas perturber l'écoulement de l'eau.

En reprenant les mêmes références que sur la figure 4, le passage 51 comprend outre la section S1 aval, la section intermédiaire S2, une section amont S3 qui est décalée radialement vers l'extérieur par rapport à la section S2 pour former une seconde chicane 64 de courbure de sens inversé par rapport à celle de la chicane 56.

La capacité de blocage des débris est donc encore accrue dans cette variante.

Dans les exemples décrits ci-dessus, les sections transversales du passage 51 sont à base de disques ou d'anneaux, mais d'autres formes, par exemple polygonales à coins arrondis peuvent être utilisées ainsi que leur combinaison.

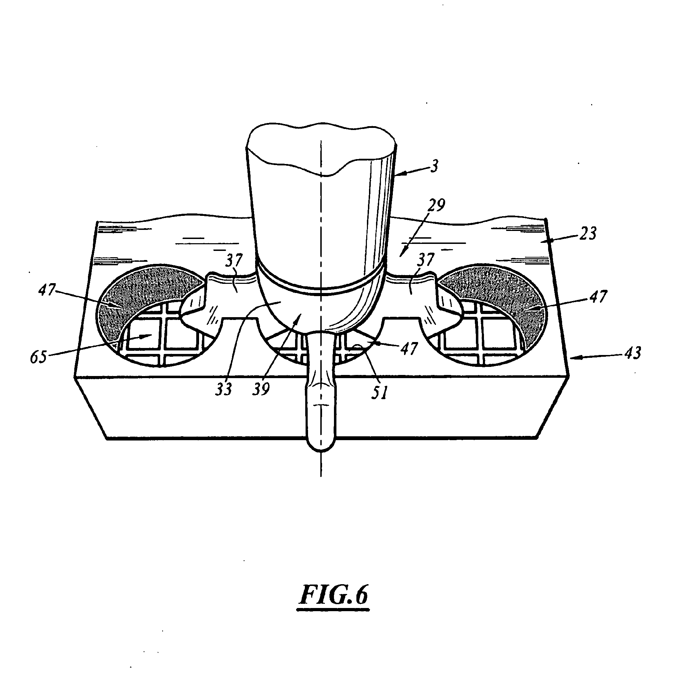

Afin d'accroître encore la capacité d'arrêt des débris, il est possible d'ajouter une grille supplémentaire, par exemple sous la plaque 43 comme illustré par la figure 6. Sur cette figure 6, la grille est repérée par la référence numérique 65, seules trois nervures 37 ont été partiellement représentées et la forme de la plaque 43 a été simplifiée. Une grille 31, par exemple analogue à celle de la figure 3, peut également être prévue au-dessus du corps 29 en plus ou à la place de la grille 65.

On peut également utiliser en plus ou à la place des grilles supplémentaires précitées des manchons.

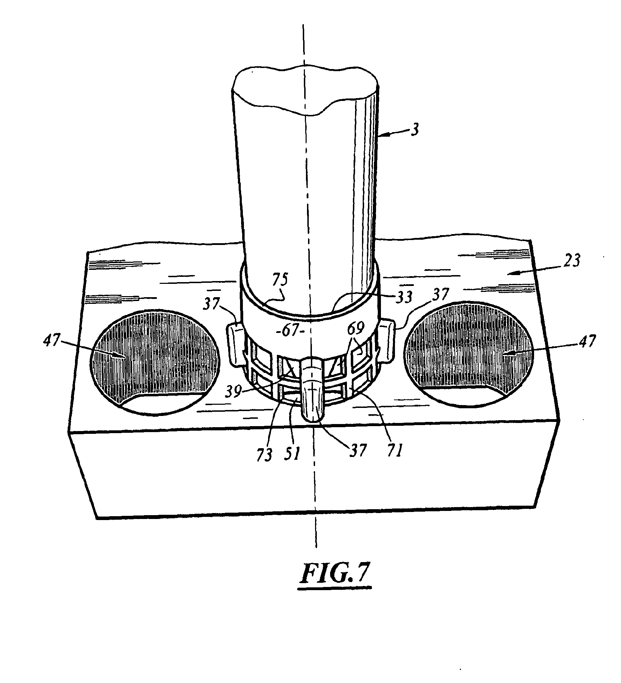

Un tel manchon 67 est représenté sur la figure 7. Ce manchon 67 est pourvu d'une série d'ouvertures 69 d'écoulement d'eau délimitées par des branches 71 destinées à retenir les débris.

Un manchon 67 est prévu par exemple pour chaque ensemble de crayon 3, bloc 33, nez 39 et passage 51 correspondant à un noeud du réseau.

L'extrémité inférieure 73 du manchon 67 est engagée dans l'extrémité supérieure du canal 47 où elle est maintenue par exemple élastiquement. L'extrémité supérieure 75 du manchon 67 est par exemple engagée élastiquement autour du bloc 33. Le manchon 67 ferme donc l'extrémité aval du passage 51 et l'eau de réfrigération issue du passage 51 traverse nécessairement le manchon 67, ce qui accroît la capacité d'arrêt des débris.

L'extrémité supérieure du manchon 67 présente une zone qui n'est pas pourvue d'ouvertures d'écoulement d'eau et qui délimite intérieurement avec le nez 39 une cavité. Cette cavité permet de piéger les débris filiformes, ce qui accroît encore la capacité d'arrêt des débris.

Dans les exemples décrits ci-dessus, les crayons 3 sont retenus latéralement par le corps 29 mais ce n'est pas toujours nécessairement le cas.

Ainsi, dans un assemblage 1 selon l'invention, les bouchons inférieurs 19 des crayons 3 peuvent être espacés de l'embout inférieur 7. Toutefois, l'essentiel des crayons 3 surmontera un nez 39 engagé lui-même dans un canal 47 de la plaque 43 afin de délimiter un passage 51 d'écoulement du fluide, en l'occurrence l'eau de réfrigération. On entend par l'expression « l'essentiel des crayons 3 », au moins 50% des crayons 3, de préférence au moins 70% et de manière préférée encore 90%.

De manière générale également, les nez 39 ne seront pas nécessairement surmontés de blocs 33.

De manière générale encore, tous les passages 51 n'ont pas nécessairement la même forme au sein de l'embout 7.

On observera également que la plaque 43 peut comprendre, outre les canaux 47 précédemment décrits, des canaux 47 supplémentaires qui eux ne sont pas disposés en des noeuds du réseau des crayons de combustible 3, des tubes-guides 11 et de l'éventuel tube d'instrumentation 14. De tels canaux 47 supplémentaires peuvent permettre de diminuer la perte de charge induite par l'embout 7. Ces canaux 47 supplémentaires peuvent également former des chicanes.

Dans les exemples décrits précédemment, l'embout inférieur 7 est destiné à un assemblage PWR. On notera cependant que les caractéristiques décrites ci-dessus peuvent également être utilisées pour des assemblages de combustible pour réacteur nucléaire à eau bouillante (BWR en anglais).

## Revendications

1. Embout inférieur (7) pour assemblage de combustible (1) de réacteur nucléaire à eau légère, l'assemblage (1) comprenant des crayons de combustible (3) et un squelette (5) de support des crayons de combustible (3), les crayons de combustible (3) s'étendant le long d'une direction longitudinale (A) et étant disposés aux noeuds d'un réseau sensiblement régulier, le squelette de support (5) comprenant un embout inférieur (7) et un embout supérieur (9) et des éléments (11) de liaison des embouts (7, 9), les crayons de combustible (3) étant disposés longitudinalement entre les embouts (7, 9),
l'embout inférieur (7) comprenant :
- des nez (39) d'orientation de l'écoulement de l'eau du réacteur pour être placés le long des extrémités longitudinales inférieures (19) des crayons de combustible (3), les nez (39) étant disposés en des noeuds du réseau sensiblement régulier pour être placés dans le prolongement longitudinal d'au moins certains des crayons de combustible (3) et/ou d'au moins certains des éléments de liaison (11) du squelette de support (5), et
- un dispositif anti-débris (43) délimitant des canaux (47) d'écoulement de l'eau,
**caractérisé en ce qu'**au moins certains des canaux (47) d'écoulement de l'eau sont disposés en des noeuds du réseau sensiblement régulier, **en ce que** des nez d'orientation (39) sont disposés au moins en partie dans lesdits canaux (47) pour délimiter avec ces derniers des passages d'eau (51), et **en ce qu'**au moins un passage d'eau (51) comprend une première section (S1) et une deuxième section (S2) qui sont décalées radialement l'une de l'autre par rapport au noeud correspondant du réseau pour former une chicane (56).

2. Embout selon la revendication 1, dans lequel aucune ligne d'écoulement d'eau ne peut traverser longitudinalement de manière rectiligne le passage (51).

3. Embout selon la revendication 1 ou 2, dans lequel le passage d'eau_(51)_ comprend une troisième section (S3) décalée radialement de la deuxième section (S2) par rapport au noeud correspondant du réseau, la première section (S1), la deuxième section (S2) et la troisième section (S3) se succédant pour former deux chicanes successives (56, 64) de sens inverses.

4. Embout selon l'une des revendications précédentes, dans lequel au moins un des passages d'eau (51) entoure le nez (39) correspondant.

5. Embout selon l'une des revendications précédentes, dans lequel au moins un passage d'eau (51) a une partie aval divergeant dans le sens d'écoulement de l'eau.

6. Embout selon l'une des revendications précédentes, dans lequel au moins un passage d'eau (51) a une partie amont convergeant dans le sens d'écoulement de l'eau.

7. Embout selon l'une des revendications précédentes, dans lequel je dispositif anti-débris (43) est venu, de matière avec les nez.

8. Embout selon l'une des revendications précédentes, J'embout comprenant au moins une grille supplémentaire d'arrêt des débris (31, 65) rapportée en amont et/ou en aval des passages (51).

9. Embout selon l'une des revendications précédentes, J'embout_ comprenant au moins un manchon d'arrêt des débris (67) qui s'étend longitudinallement entre l'extrémité aval d'un canal (47) d'écoulement d'eau et un bloc (33) surmontant le nez (39) correspondant.

10. Embout selon la revendication 9, dans lequel le manchon (67) comprend une zone (75) dénuée d'ouverture d'écoulement d'eau et qui délimite avec le nez (39) une cavité de piégeage des débris.

11. Embout selon l'une des revendications précédentes, J'embout comprenant des moyens (57) de retenue latérale des extrémités longitudinales inférieures de sensiblement tous les crayons de combustible (3).

12. Embout selon la revendication 11, dans lequel les moyens de retenue comprennent des orifices (57) de réception des extrémités longitudinales inférieures des crayons de combustible ménagés dans des blocs (33) surmontant les nez (39).

13. Assemblage de combustible (1) pour réacteur nucléaire, l'assemblage (1) comprenant des crayons de combustible (3) et un squelette (5) de support des crayons de combustible (3), les crayons de combustible (3) s'étendant le long d'une direction longitudinale (A) et étant disposés aux noeuds d'un réseau sensiblement régulier, le squelette de support (5) comprenant un embout inférieur (7) et un embout supérieur (9) et des éléments (11) de liaison des embouts (7, 9), les crayons de combustible (3) étant disposés longitudinalement entre les embouts (7, 9), dans lequel l'embout (7) inférieure est un embout selon l'une des revendications précédentes, les nez (39) étant disposés longitudinalement sous des crayons de combustible (3) ou des éléments (11) de liaison des embouts (7, 9).

## Claims

1. Bottom end-piece (7) for a fuel assembly (1) of a light water nuclear reactor, the assembly (1) comprising fuel rods (3) and a skeleton (5) for supporting the fuel rods (3), the fuel rods (3) extending in a longitudinal direction (A) and being arranged at the nodes of a substantially regular network, the support skeleton (5) comprising a bottom end-piece (7) and a top end-piece (9) and elements (11) for connecting the end-pieces (7, 9), the fuel rods (3) being arranged longitudinally between the end-pieces (7, 9),
the bottom end-piece (7) comprising:
- nozzles (39) for directing the flow of water of the reactor along the lower longitudinal ends (19) of the fuel rods (3), the nozzles (39) being arranged at nodes of the substantially regular network so as to be placed in the longitudinal continuation of at least some of the fuel rods (3) and/or at least some of the connection elements (11) of the support skeleton (5), and
- an anti-debris device (43) which delimits water flow channels (47),
**characterised in that** at least some of the water flow channels (47) are arranged at nodes of the substantially regular network, **in that** direction nozzles (39) are arranged at least partially in the channels (47) in order to delimit water passages (51) therewith, and **in that** at least one water passage (51) comprises a first section (S1) and a second section (S2) which are mutually offset radially relative to the corresponding node of the network in order to form a baffle (56).

2. End-piece according to claim 1, wherein no water flow line may extend longitudinally through the passage (51) in a rectilinear manner.

3. End-piece according to claim 1 or 2, wherein the water passage (51) comprises a third section (S3) which is radially offset relative to the second section (S2) with respect to the corresponding node of the network, the first section (S1), the second section (S2) and the third section (S3) following each other in order to form two successive baffles (56, 64) of opposing directions.

4. End-piece according to any one of the preceding claims, wherein at least one of the water passages (51) surrounds the corresponding nozzle (39).

5. End-piece according to any one of the preceding claims, wherein at least one water passage (51) has a downstream portion which diverges in the flow direction of the water.

6. End-piece according to any one of the preceding claims, wherein at least one water passage (51) has an upstream portion which converges in the flow direction of the water.

7. End-piece according to any one of the preceding claims, the anti-debris device (43) is integral with the nozzles (39).

8. End-piece according to any one of the preceding claims, the end-piece comprising at least one additional grid (31, 65) for retaining debris which is fitted upstream and/or downstream of the passages (51).

9. End-piece according to any one of the preceding claims, the end-piece comprising at least one debris retaining sleeve (67) which extends longitudinally between the downstream end of a water flow channel (47) and a block (33) which covers the corresponding nozzle (39).

10. End-piece according to claim 9, wherein the sleeve (67) comprises a zone (75) which has no water flow opening and which delimits a cavity for trapping debris with the nozzle (39).

11. End-piece according to any one of the preceding claims, the end-piece comprising means (57) for laterally retaining the lower longitudinal ends of substantially all the fuel rods (3).

12. End-piece according to claim 11, wherein the retention means comprise holes (57) for receiving the lower longitudinal ends of the fuel rods which are provided in blocks (33) which cover the nozzles (39).

13. Fuel assembly (1) for a nuclear reactor, the assembly (1) comprising fuel rods (3) and a skeleton (5) for supporting the fuel rods (3), the fuel rods (3) extending in a longitudinal direction (A) and being arranged at the nodes of a substantially regular network, the support skeleton (5) comprising a bottom end-piece (7) and a top end-piece (9) and elements (11) for connecting the end-pieces (7, 9), the fuel rods (3) being arranged longitudinally between the end-pieces (7, 9), wherein the bottom end-piece (7) is an end-piece according to any one of the preceding claims, the nozzles (39) being arranged longitudinally below fuel rods (3) or elements (11) for connecting the end-pieces (7, 9).

## Patentansprüche

1. Fußteil (7) für die Anordnung von Brennstoff (1) eines Leichtwasser-Atomreaktors, wobei die Anordnung (1) Brennstäbe (3) und ein Trägergerüst (5) für die Brennstäbe (3) umfasst, wobei die Brennstäbe (3) sich entlang einer Längsrichtung (A) erstrecken und an den Knoten eines im Wesentlichen regelmäßigen Netzes angeordnet sind, wobei das Trägergerüst (5) ein Fußteil (7) und ein Kopfteil (9) und Elemente (11) zur Verbindung der Teile (7, 9) aufweist und die Brennstäbe (3) längs zwischen den Teilen (7, 9) angeordnet sind,
wobei das Fußteil (7) umfasst:
- Orientierungsnasen (39) für die Strömung des Wassers des Reaktors, die dazu dienen, an den unteren Längsenden (19) der Brennstäbe (3) angeordnet zu werden, wobei die Nasen (39) an Knoten des im Wesentlichen gleichmäßigen Netzes angeordnet sind, um in der Längsverlängerung mindestens einiger der Brennstäbe (3) und/oder mindestens einiger der Verbindungselemente (11) des Trägergerüstes (5) angeordnet zu werden, und
- eine Antiablagerungsvorrichtung (43), die Strömungskanäle (47) für das Wasser begrenzt,
**dadurch gekennzeichnet, dass** mindestens einige der Strömungskanäle (47) für das Wasser in den Knoten des im Wesentlichen regelmäßigen Netzes angeordnet sind, dass Orientierungsnasen (39) mindestens teilweise in den Kanälen (47) angeordnet sind, um mit diesen letzteren Wasserdurchgänge (51) zu begrenzen und dass mindestens ein Wasserdurchgang (51) einen ersten Querschnitt (S1) und einen zweiten Querschnitt (S2) umfasst, die radial zueinander in Bezug auf den korrespondierenden Knoten des Netzes versetzt sind, um eine Schikane (56) zu bilden.

2. Fußteil nach Anspruch 1, bei dem keine Wasserströmungslinie den Durchgang (51) in Längsrichtung in geradliniger Weise durchqueren kann.

3. Fußteil nach Anspruch 1 oder 2, bei dem der Durchgang (51) für das Wasser einen dritten Querschnitt (S3) umfasst, der radial zu dem zweiten Querschnitt (S2) in Bezug auf den korrespondierenden Knoten des Netzes versetzt ist, wobei der erste Querschnitt (S1), der zweite Querschnitt (S2) und der dritte Querschnitt (S3) aufeinander folgen, um zwei aufeinander folgende Schikanen (56, 64) mit umgekehrter Richtung zu bilden.

4. Fußteil nach einem der vorhergehenden Ansprüche, bei dem mindestens einer der Wasserdurchgänge (51) die korrespondierende Nase (39) umgibt.

5. Fußteil nach einem der vorhergehenden Ansprüche, bei dem mindestens ein Wasserdurchgang (51) einen in Richtung der Wasserströmung stromabwärts gelegenen, divergierenden Bereich aufweist.

6. Fußteil nach einem der vorhergehenden Ansprüche, bei dem mindestens ein Wasserdurchgang (51) in der Strömungsrichtung des Wassers einen stromaufwärts gelegenen, konvergierenden Bereich aufweist.

7. Fußteil nach einem der vorhergehenden Ansprüche, bei dem die Antiablagerungsvorrichtung (43) aus einem Material mit den Nasen besteht.

8. Fußteil nach einem der vorhergehenden Ansprüche, wobei das Teil mindestens ein zusätzliches Gitter (31, 65) zum Aufhalten von Ablagerungen aufweist, das stromaufwärts und/oder stromabwärts zu den Durchgängen (51) eingebracht ist.

9. Fußteil nach einem der vorhergehenden Ansprüche, wobei das Teil mindestens eine Hülse (67) zum Aufhalten von Ablagerungen umfasst, die sich in Längsrichtung zwischen dem stromabwärts gelegenen Ende des Wasserströmungskanals (47) erstreckt und einen Block (33) umfasst, der die korrespondierende Nase (39) übergreift.

10. Fußteil nach Anspruch 9, bei dem die Hülse (67) eine Zone (75) umfasst, die bar jeder Öffnung für die Wasserströmung ist und die mit der Nase (39) einen Hohlraum zum Einfangen der Ablagerungen begrenzt.

11. Fußteil nach einem der vorhergehenden Ansprüche, wobei das Teil Mittel (57) zum seitlichen Halten der unteren Längsenden von im Wesentlichen allen Brennstäben (39) umfasst.

12. Fußteil nach Anspruch 11, bei dem die Haltemittel Öffnungen (57) für die Aufnahme der unteren Längsenden der Brennstäbe umfassen, die in die Nasen (39) übergreifenden Blöcken (33) eingearbeitet sind.

13. Brennstoffanordnung (1) für einen Atomreaktor, wobei die Anordnung (1) Brennstäbe (3) und ein Trägergerüst (5) für die Brennstäbe (3) umfasst, wobei die Brennstäbe (3) sich entlang einer Längsrichtung (A) erstrecken und an Knoten eines im Wesentlichen regelmäßigen Netzes angeordnet sind, wobei das Trägergerüst (5) ein Fußteil (7) und ein Kopfteil (9) und Elemente (11) zur Verbindung der Teile (7, 9) umfasst, wobei die Brennstäbe (3) längs zwischen den Teilen (7, 9) angeordnet sind, bei der das Fußteil (7) ein Teil nach einem der vorhergehenden Ansprüche ist und wobei die Nasen (39) längs unter den Brennstäben (3) oder den Elementen (11) zur Verbindung der Teile (7, 9) angeordnet sind.
